# EUROPEAN PATENT SPECIFICATION

(11) **EP 3 102 027 B1**
(45) Date of publication and mention of the grant of the patent: **23.12.2020**
(21) Application number: 15735439.0
(22) Date of filing: 09.01.2015
(51) Int. Cl.: A01K 15/02, G08B 1/08, A01K 27/00

(54) **INTEGRATED DOG TRACKING AND STIMULUS DELIVERY SYSTEM**
INTEGRIERTES HUNDEVERFOLGUNGS- UND STIMULUSABGABESYSTEM
SYSTÈME INTÉGRÉ DE TRAÇAGE ET DE DÉLIVRANCE DE STIMULI POUR CHIEN

(30) Priority: 13.01.2014 US 201461926797 P; 24.07.2014 US 201414340493
(43) Date of publication of application: 14.12.2016
(73) Proprietor: Radio Systems Corporation, Knoxville, TN 37932 (US)
(72) Inventor: GOETZL, Brent, Knoxville, Tennessee 37932 (US); PILTONEN, Harri, Knoxville, Tennessee 37932 (US); EDWARDS, Jason, Knoxville, Tennessee 37932 (US); ZINN, Kevin, Knoxville, Tennessee 37932 (US); WACASEY, Kenneth, Knoxville, Tennessee 37932 (US)
(74) Representative: Mewburn Ellis LLP
(86) International application number: PCT/US2015/010864
(87) International publication number: WO 2015/106133

(56) References cited:
- WO-A1-2006/000015
- US-A1- 2002 103 610
- US-A1- 2008 141 949
- US-A1- 2008 236 514
- US-A1- 2013 141 237
- US-B1- 6 830 012
- US-B2- 8 065 978
- HIGH TECH PRODUCTS, INC.: 'Human Contain Model X-10 Rechargeable' MUTI-FUNCTION ELECTRONIC DOG FENCE ULTRA-SYSTEM., [Online] 28 April 2012, page 4, 6, 28, XP008184171 Retrieved from the Internet: <URL:HTTP://WEB.ARCHIVE.ORG/WEB/20120112221 915/HTTP://HIGHTECHPET.COM/USER_MANUALS/HC% 20X-10_PRESS.PDF>

## Description

### Field of the Invention

The present inventive concept relates to the field of animal tracking devices. More particularly, the invention relates to a modular dog collar having a docking system for selectively and operatively connecting a stimulus unit to a tracking unit.

### Technology in the Field of the Invention

In order to train and/or control an animal, numerous collar mounted stimulation devices have been developed and marketed throughout the pet industry. The majority of such conventional devices have typically been grouped together under the general category of dog training systems. The conventional stimulation devices deliver stimulation to the animal in the form of shock, sound, vibration or spray to correct any of a variety of behaviors. Such stimulation devices are typically controlled by auto-activation based on feedback picked up from the animal by sensors in the collar mounted device, by manual control provided by a wireless link between the collar mounted device and a remote handheld unit, or a combination of both.

In addition to the need to train or control an animal's behavior, there is also a need to track an animal's location and movement in real time. Dog location systems are currently available on the market. Such dog location systems can typically be divided into three technologies: telemetry-based, GNSS (Global Network Satellite Systems)/telemetry-based, and GNSS/cell phone-based.

Regardless of the stimulation system used, or the tracking technology used, it is common for a user to want to use an animal training system in conjunction with an animal tracking system for the same animal. Of course, a user may employ two separate systems for the same animal, wherein one system provides the animal training, i.e., the stimulus, and the other system provides the animal tracking. Each of these systems operates independently and requires its own control device, such as two separate dedicated wireless remote handheld control units. This implementation is cumbersome as it would two remote handheld control units and, most likely, two separate dog collar attachments.

In many dog competitions, it is not permissible to outfit the competing dog with any type of stimulus unit during a performance. This renders the dual system illegal for competition. This would also render any system that attempts to integrate the circuitry or control for the tracking system and the training system into a single unit illegal.

Therefore, a need exists for an integrated dog tracking and training system which provides for the selective coupling and decoupling of the stimulation components and the overall system. A need further exists for a combined tracking system and stimulation system wherein the stimulation (or training) system share circuitry, power and control, but wherein the stimulation system is a modular unit that may be selectively and quickly removed from a dog's collar or harness.

US 2013/0141237 A1 discloses an animal tracking and control apparatus, comprising: a tracking unit to track an animal; and a stimulus unit to provide a stimulus to the animal; wherein the tracking unit and stimulus unit are configured to be removably coupled together; and the tracking unit and/or stimulus unit communicate with a common control device.

### BRIEF SUMMARY OF THE INVENTION

An integrated animal tracking unit and stimulus unit is defined in claim 1. The two units are removably coupled together and controlled by a common device. Optionally, the tracking unit is affixed to an animal encircling device, i.e., a dog collar or a harness.

The tracking unit may be a Global Navigation Satellite Systems (GNSS) device that provides location information to the control device. At the same time, the stimulus unit is preferably configured to deliver an electrical stimulus through a pair of probes that contact the skin surface of the animal.

The tracking unit, or module, is beneficially provided with a receiving portion, which enables the stimulus unit to be docked to the tracking unit, or module. To this end, the tracking module preferably includes an extending male portion that is received by the receiving female portion to couple the tracking unit and the stimulus unit together. The extending portion and receiving portion may be provided in a dovetail configuration, and may be slidably connected to couple the tracking unit and the stimulus unit together. The tracking unit and the stimulus unit may be further secured together by one or more fastening members, such as screws.

When docked together, the training module may under one embodiment share the electrical circuitry and, preferably, the power supply of the tracking module.

### BRIEF DESCRIPTION OF THE DRAWINGS

So that the manner in which the present inventions can be better understood, certain illustrations, charts and/or flow charts are appended hereto. It is to be noted, however, that the drawings illustrate only selected embodiments of the inventions and are therefore not to be considered limiting of scope, for the inventions may admit to other equally effective embodiments and applications.
Figure 1 is a perspective view of an animal tracking unit as may be used in the modular dog collar of the present invention, in one embodiment. The illustrative tracking unit includes a receiving portion.
Figure 2 is a perspective view of an animal stimulus unit as may be used in the modular dog collar of the present invention, in one embodiment. The illustrative stimulus unit includes an extending portion configured to engage the receiving portion of the animal tracking unit.
Figure 3 is a perspective view of the animal tracking unit and animal stimulus unit from Figures 1 and 2. Here, the animal tracking unit of Figure 1 and the stimulus unit of Figure 2 are seen in exploded apart relation.
Figure 4 is a perspective view of the animal tracking unit of Figure 1. Here, the tracking unit is ready to receive a removable cover, shown in exploded apart relation.
Figures 5A through 5C illustrate the docking of the stimulus unit to the tracking unit while fixed to an animal collar.
Figure 6 is a perspective view of a portion of a modular dog tracking collar of the present invention, in one embodiment. The animal tracking unit is affixed to a dog collar, but without the stimulus unit.
Figure 7 is a perspective view of the modular dog collar of Figure 6. Here, the stimulus unit is shown in exploded-apart relation to the animal tracking unit.
Figure 8 is a perspective view of the modular dog collar of Figure 7. Here, the stimulus unit has been docked with the animal tracking unit, forming an integral modular dog collar.
Figure 9 is another perspective view of the modular dog collar of Figure 6. Here, a removable cover is shown in exploded-apart relation to the animal tracking unit.
Figure 10 is a perspective view of the modular dog collar of Figure 9. Here, the removable cover has been docked with the animal tracking unit.
Figure 11 is an enlarged partial cross-section of the docked tracking unit and stimulus unit. A screw is shown securing the two docked components together.
Figure 12 is a plan view of a control device used to control the tracking unit and the stimulus unit of Figure 8, in one embodiment.
Figure 13 illustrates a display screen generated by the control device of Figure 12, in one example.
Figure 14 illustrates another display screen generated by the control device of Figure 12, in one example.
Figure 15 illustrates another display screen generated by the control device of Figure 12, in one example.
Figure 16 illustrates another display screen generated by the control device of Figure 12, in one example.
Figure 17 is a perspective view of a modular dog tracking collar of the present invention, in one embodiment. The collar includes an animal tracking unit and docked stimulus unit. Figure 17 is intended to be a more complete showing of the modular dog collar of Figure 6.
Figure 18 is a perspective view of the animal tracking unit and docked stimulus unit from Figure 17.
Figure 19 is a front view of an integrated GPS tracking/E-collar system, under an embodiment.
Figure 20 is a top down view of an integrated GPS tracking/E-collar system, under an embodiment.
Figure 21 is a side view of an integrated GPS tracking/E-collar system, under an embodiment.
Figure 22 is a bottom view of the integrated GPS tracking/E-collar system, under an embodiment.
Figures 23A and 23B are cross-sectional views of the integrated GPS tracking/E-collar system, under an embodiment.
Figure 24 shows an exploded view of the integrated GPS tracking/E-collar system, under an embodiment.
Figure 25 provides another exploded view of the integrated GPS tracking/E-collar system, under an embodiment.
Figure 26 is a side view of the integrated GPS tracking/E-collar system coupled to GPS and radio antennae, under an embodiment.
Figure 27 is a top view of the integrated GPS tracking/E-collar system coupled to GPS and radio antennae, under an embodiment.
Figure 28 is a front view of the integrated GPS tracking/E-collar system coupled to GPS and radio antennae, under an embodiment.
Figure 29 is a unit block diagram describing circuitry of a handheld control device, under an embodiment.
Figure 30 is a unit block diagram describing circuitry of a tracking unit, under an embodiment.
Figure 31 shows the integrated GPS tracking/E-collar system, under an embodiment. Figure 31 also shows a decoupled E-collar unit next to the system, under an embodiment.
Figure 32 shows the integrated GPS tracking/E-collar system, under an embodiment. Figure 32 also shows a decoupled E-collar unit next to the system, under an embodiment.
Figure 33 shows the integrated GPS tracking/E-collar system, under an embodiment. Figure 33 also shows a decoupled E-collar unit next to the system, under an embodiment.

### DETAILED DESCRIPTION OF CERTAIN EMBODIMENTS

### Definitions

For purposes of the present disclosure, it is noted that spatially relative terms, such as "up," "down," "right," "left," "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over or rotated, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

### Description of Selected Specific Embodiments

Various embodiments of the present general inventive concept, as described herein, provide an animal tracking and control apparatus having a tracking unit to track an animal, and a stimulus unit to provide a stimulus to the animal. The tracking unit and stimulus unit are configured to be removably coupled together. In other words, the tracking unit and stimulus unit are formed such that the two units are able to be docked together. The coupling of the two units as modules may be referred to interchangeably throughout this description as docking.

The tracking unit is configured to transmit and/or receive signals to/from a common control device. In the various embodiments described herein, the control device is described as a remote handheld control device, or more simply a handheld transceiver. The single handheld transceiver communicates with both the stimulus unit and the tracking unit, and may send/receive signals to/from the units using different channels or different ID codes. Also, it is understood that the control device is not limited to any ornamental features shown in the handheld transceiver described in the drawings.

The animal tracking and control apparatus may be provided to any animal, but is typically described herein as being provided to a dog. For example, the animal tracking and control apparatus may be secured to an animal encircling device such as a dog collar which is worn by a dog, in order to track the dog's movements and provide a control stimulus to the dog. This is merely one non-limiting example of how the animal tracking and control apparatus may be utilized.

In an example embodiment in which the animal tracking and control apparatus is secured to the animal by an animal encircling device, such as a dog collar, either the tracking unit or the stimulus unit may be secured to the dog collar, and the other of the tracking unit or the stimulus unit is removably coupled to the unit secured to the dog collar. As an example, if the tracking unit is secured to the dog collar, the stimulus unit may be removed so that only the tracking unit is provided to the dog wearing the dog collar. Further, the animal tracking module may be provided with a cover to be removably coupled to the tracking module in lieu of the stimulus unit being in a coupled configuration.

In the examples illustrated and discussed throughout this description in which the animal tracking and control apparatus is secured to an animal encircling device such as a dog collar, the tracking unit is described as being secured to the dog collar. The dog collar is secured to the tracking unit by securing members such as screws, a molded collar that is permanently fastened to the tracking unit, a pass through woven collar, an attached woven collar, or a pass through molded collar.

The animal tracking unit may operate similarly to a typical Global Navigation Satellite System (GNSS) device. Various GNSS tracking systems, which employ GNSS systems such as the Global Positioning System (GPS) of the United States, the Russian GLONASS, etc., have been typically used to monitor the movement of a mobile subject such as an animal, often relative to a selected containment area. In such systems, the position and speed of the animal are monitored through the use of the GNSS satellites, and the position and speed of the animal may be displayed on a monitoring device. If a containment area is also employed, the containment area may also be displayed on the monitoring device.

The animal stimulus unit may operate similarly to various animal control apparatuses. For instance, the animal stimulus unit may provide the animal with various stimuli such as vibrations, sound or spray. Further, these various stimuli may be selectively provided to the animal, and the levels of the various stimuli may be adjusted. For example, a vibration provided to a dog to control a certain behavior may be increased if the dog does not respond to the previously used level of vibration stimulus. The animal stimulus unit may be provided with one or more protrusions to extend toward the animal's skin to make contact through the coat.

The previously described control device may be a handheld transceiver which sends/receives signals to/from the animal tracking module and stimulus module, and may have a display such as a graphic user interface (GUI) which may show the location of one or more animals equipped with the tracking module.

The handheld transceiver may have a plurality of controls to allow various operations such as switching the display emphasis between various hunting dogs being tracked and providing various stimuli levels to different dogs. The handheld transceiver may communicate with the tracking module using a different channel than the one used to communicate with the stimulus module.

Thus, an integrated animal tracking and control system provides a user or owner with an animal tracking or animal tracking/training system that can be user configured. In any of a number of example configurations, there is only one collar (or other animal encircling device) mounted device which is provided to the animal, and only one remote handheld control unit. The collar mounted device may under one embodiment include both the tracking unit and the stimulus unit in a configuration in which those units are docked together, and includes only one of the units in a configuration in which the units are not docked together. Such an apparatus and system greatly simplifies the mounting and operation of an animal training and/or tracking system. Such an apparatus and system also allows the sporting competitor to readily remove the training module for competition.

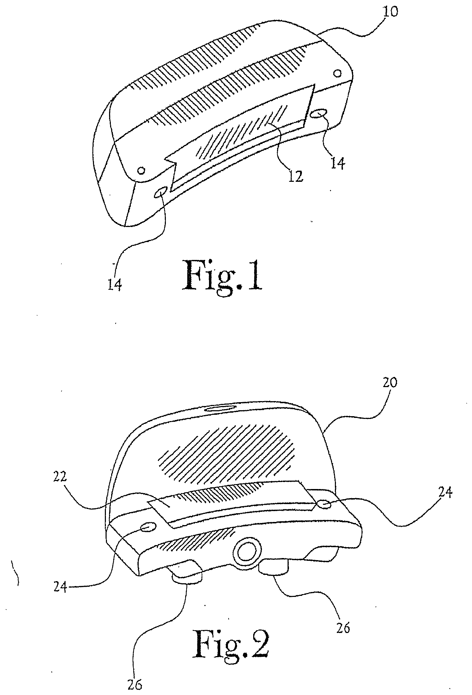

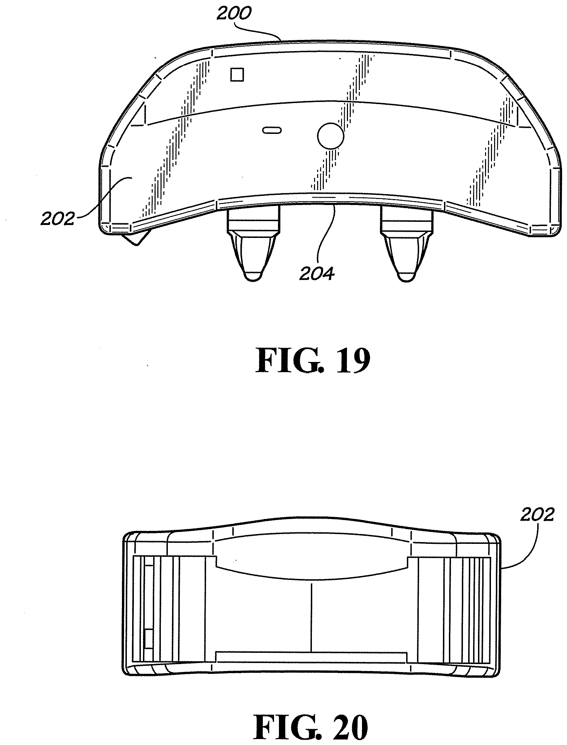

**Figure 1** is a perspective view of an animal tracking unit **10** as may be used in the modular dog collar of the present invention, in one embodiment. The illustrative tracking unit includes a receiving portion. The tracking unit **10** may receive GNSS signals and transmit position signals to a control device. In this example embodiment, the tracking unit **10** is provided with receiving portion **12** configured to receive a stimulus unit (see Figure 2, **20**) to be removably coupled to the tracking unit **10.** In this example, the receiving portion is configured so as to form a dovetail connection with the coupled stimulus unit **20.** It is understood that the dovetail connection is merely one configuration by which the tracking unit **10** will be docked with the coupled stimulus unit **20.**

The tracking unit **10** of this example embodiment is also provided with holes **14** to receive screws to further secure the coupled stimulus unit **20** to the tracking unit **10.** Although screws are described in this example embodiment, any type of adhesion member, such as bolts, brackets, clamps, and so on, may be used to further secure the coupled, or docked, units. Also, in other example embodiments, no adhesion members may be used to further secure the docking of the units. It is understood that the shape and dimensions of the tracking unit **10,** as well as the other example units illustrated in the following drawings, are merely simple examples for illustrative purposes, and corresponding units in various embodiments of the present general inventive concept may vary widely in size, shape, composition, and so on.

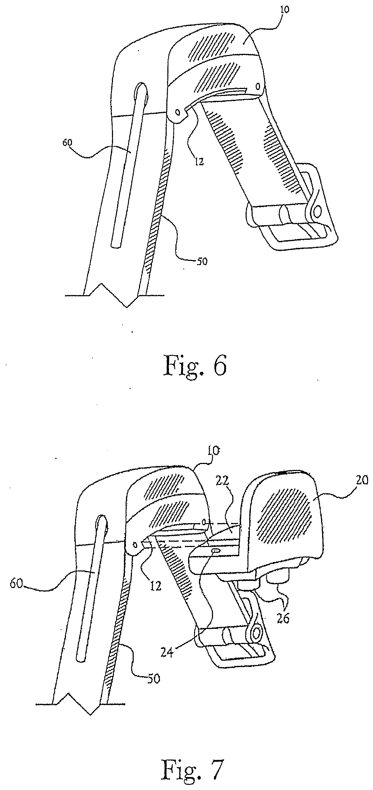

The tracking unit **10** may further be provided with an antenna **60** (as described later in **Figure 6**) or antennas (not shown) to transmit/receive GPS signals and/or signals to the control device. The antenna(s) may be integrated with an animal encircling device to which the tracking unit **10** is secured.

**Figure 2** is a perspective view of an animal stimulus unit **20** as may be used in the modular dog collar of the present invention, in one embodiment. The illustrative stimulus unit includes an extending portion configured to engage the receiving portion of the animal tracking unit. The stimulus unit **20** may receive control signals from the control device which also communicates with the tracking unit **10** in order to provide a stimulus to the animal. In this example embodiment the stimulus unit is provided with an extending portion **22** configured to slide into the receiving portion **12** of the tracking unit **10** in order to dock the stimulus unit **20** to the tracking unit **10** with a dovetail connection. It is understood that either of the tracking unit **10** or the stimulus unit **20** may be provided with the receiving portion **12,** with the remaining one of the tracking unit **10** or the stimulus unit **20** being provided with the extending portion **22.** Also, the coupling of the units may be achieved through configurations other than a receiving portion receiving an extending portion, and/or other than a slidable connection as illustrated in these drawings.

The stimulus unit **20** of this example embodiment is provided with through holes **24** through which screws may pass to further secure the docking of the tracking unit **10** and the stimulus unit **20.** The screws, or other adhesion members, pass through the through holes **24** to the holes **14** of the tracking unit **10.**

The stimulus unit **20** of this example embodiment is also provided with protrusions **26** which extend from the stimulus unit **20** to contact the skin of an animal and provide a stimulus, such as a vibration. The level of the stimulus may be adjusted through the control device communicating with the stimulus unit **20.**

It is understood that the protrusions **26** are merely an example of how the stimulus may be delivered to the animal.

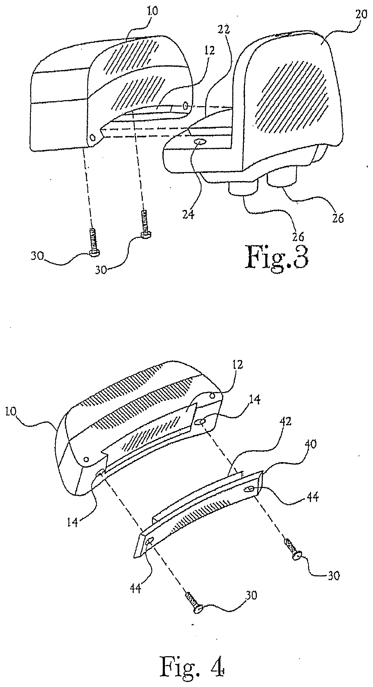

**Figure 3** is a perspective view of the animal tracking unit **10** and animal stimulus unit **20** from **Figures 1** and **2****.** Here, the animal tracking unit of **Figure 1** and the stimulus unit of **Figure 2** are seen in exploded apart relation. As illustrated, the extending portion **22** of the stimulus unit **20** slides into the receiving portion **12** of the tracking unit **10** to form a dovetail connection. After the docking is achieved, screws **30** may be screwed into the holes **14** of the tracking unit **10** through the through holes **24** of the stimulus unit **20** in order to further secure the docking of the units.

Although not illustrated in these drawings, each of the tracking unit **10**
may be provided with on/off buttons, on/off indicators, charging jacks, and other similar features typically provided to electric/electronic devices. Also,
the tracking unit **10** may be provided with one or more internal and/or external antennas to be used in communication with the control device and/or GNSS satellites. One or more of the various antennas may be integrated with or supported by an animal encircling device to which the animal tracking and control apparatus is attached. These features have largely been omitted from the drawings to present a more clear illustration of the docking feature of the units.

**Figure 4** is a perspective view of the animal tracking unit **10** of **Figure 1****.** Here, the tracking unit **10** is ready to receive a removable cover 40, shown in exploded apart relation. The cover **40** is provided with an extending portion **42** that corresponds to the extending portion **22** of the stimulus unit **20,** and which slides into the receiving portion **12** of the tracking unit **10** to form a dovetail connection in the same manner as that formed between the tracking unit **10** and the stimulus unit **20.** The cover is also provided with through holes **44** through which the screws **30** may be screwed into the holes **14** of the tracking unit **10** to further secure the cover **40** to the tracking unit **10.**

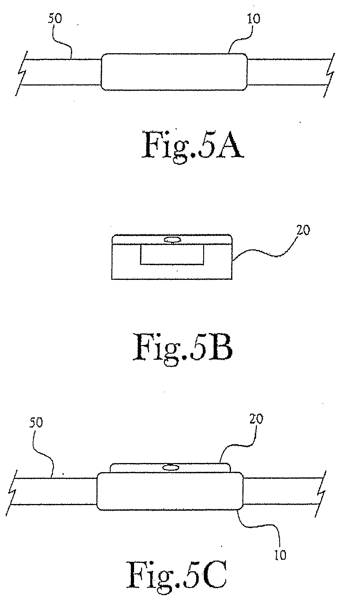

**Figures 5A** through **5C** illustrate the docking of the stimulus unit **20** to the tracking unit **10** while fixed to an animal collar **50.** These drawings are highly simplified in order to illustrate an "outside" view of the tracking unit **10** and stimulus unit **20** as provided to the animal encircling device (or collar or harness) **50** so as to be mounted on an animal. In **Figure 5A****,** the tracking unit **10** is fixed to the animal encircling device **50,** an example of which may be a dog collar. The tracking unit **10** may be fixed to the dog collar **50** in any number of ways, and may be permanently or removably fixed to the dog collar **50.**

**Figure 5B** is a simple "outside" view of the stimulus unit **20,** the "outside" orientation indicating the view from directly outside portions of the dog collar **50** adjacent to the tracking unit **10** in **Figures 5A** and **5C****.** In other words, the "outside" view is that of one looking at a dog wearing the dog collar **50.**

**Figure 5C** illustrates the stimulus unit **20** docked to the tracking unit **10.**

**Figure 6** is a perspective view of a portion of a modular dog tracking collar **50** of the present invention, in one embodiment. The animal tracking unit **10** is affixed to a dog collar **50,** but without the stimulus unit. As illustrated in **Figure 6****,** the receiving portion **12** of the tracking unit **10** is located on the inner side of the tracking unit **10,** which is the side of the tracking unit **10** that is facing the animal, e.g., the dog. The tracking unit **10** is able to track the dog and communicate with the control device regardless of whether the stimulus unit **20** is docked with the tracking unit **10.**

**Figure 6** also illustrates an antenna **60** provided to the tracking unit **10,** which has been omitted from various other illustrated embodiments for the sake of clarity. As previously described, the tracking unit may be provided with more than one antenna.

**Figure 7** is a perspective view of the modular dog collar **50** of **Figure 6****.** Here, the stimulus unit **20** is shown in exploded-apart relation to the animal tracking unit **10.** As illustrated in **Figure 7****,** the extending portion **22** of the stimulus unit **20** slides into the receiving portion **12** of the tracking unit **10** to dock the units in a dovetail connection. Once docked, the protrusions **26** extend away from the tracking unit **10** and stimulus unit **20** toward the dog wearing the dog collar **50.**

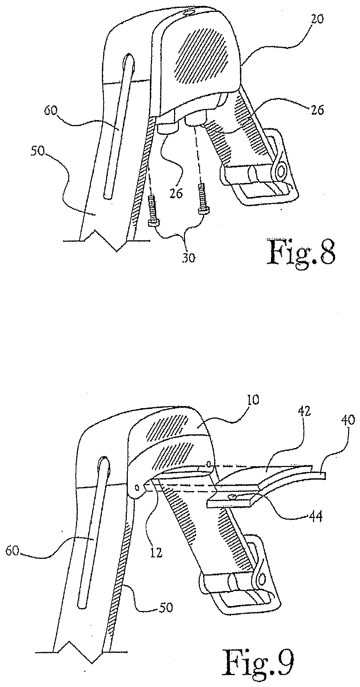

**Figure 8** is a perspective view of the modular dog collar **50** of **Figure 7****.** Here, the stimulus unit **10** has been docked with the animal tracking unit **20,** forming an integral modular dog collar. As illustrated in **FIG. 8****,** the screws **30** pass through the through holes **24** of the stimulus unit **20** to screw into the holes **14** of the tracking unit **10.** While the screws **30** further secure the docking of the stimulus unit **20** to the tracking unit **10,** it is understood that such further securing and adhesion members are not required under other various embodiments.

**Figure 9** is another perspective view of the modular dog collar **50** of **Figure 6****.** Here, a removable cover **40** is shown in exploded-apart relation to the animal tracking unit. As illustrated in **Figure 9****,** the extending portion **42** of the cover **40** slides into the receiving portion **12** of the tracking unit **10** to couple the cover to the tracking unit **10** in a dovetail connection. The use of the cover **40,** in the absence of the stimulus unit **20,** provides a smooth contact surface to increase the comfort of the dog wearing the dog collar **50.**

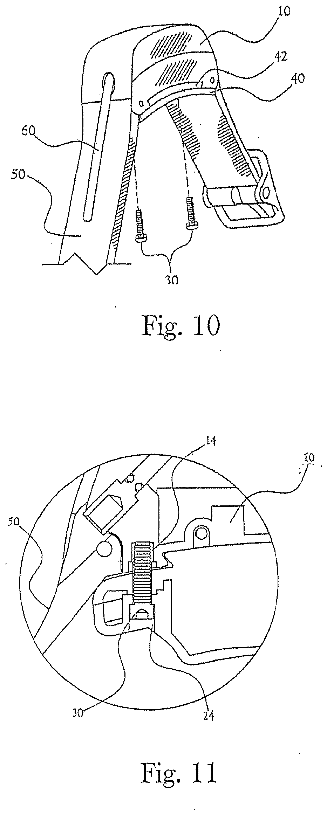

**Figure 10** is a perspective view of the modular dog collar **50** of **Figure 9****.** Here, the removable cover has been docked with the animal tracking unit **10.** As illustrated in **Figure 10****,** the screws **30** pass through the through holes **44** of the cover **40** to screw into the holes **14** of the tracking unit **10.** While the screws **30** further secure the cover **40** to the tracking unit **10,** it is understood that such further securing and adhesion members are not required under other various embodiments.

**Figure 11** is an enlarged partial cross-section of the docked tracking unit **10** and stimulus unit **20.** A screw **30** is shown securing the two docked components together. As illustrated in **Figure 11****,** the screw **30** is extends through the through hole **24** of the stimulus unit **20** to screw into the hole **14** of the tracking unit **10,** further securing the docking of the stimulus unit **20** and the tracking unit **10.** While the screws **30** further secure the docking of the stimulus unit **20** to the tracking unit **10,** it is understood that such further securing and adhesion members are not required under various other embodiments.

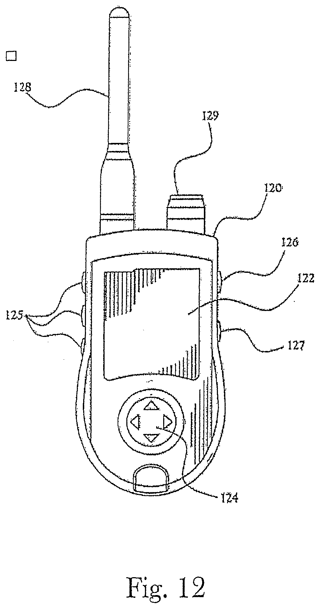

**Figure 12** is a view of a control device **120** used to control the tracking unit and the stimulus unit of **Figure 8****,** in one embodiment. As illustrated in **Figure 12****,** this example control device **120** is a remote handheld control device. The control device **120** is provided with a display **122** to display a graphical user interface (GUI), a direction button **124** to interface with the GUI, a plurality of stimulus buttons **125,** a back button **126,** a tracking/training toggle button **127,** a GNSS antenna **129,** and a control device antenna **128.**

The control device **120** determines a user's location from a built-in GPS antenna **129.** The built-in GPS antenna receives location updates from a GPS antenna provided to the tracking unit **10** to track the location of the animal equipped with the tracking and control apparatus. The GPS antenna provided to the tracking unit **10** may be mounted on the dog collar **50.** The display **122** may display the user's location, the location of one or more animals provided with the animal tracking and control apparatus relative to the user or to a predetermined area, a list of options for stimulating the respective animals, levels of stimulation, and so on. The stimulus buttons **125** may be used to send a signal to activate the stimulus unit 20 to deliver a stimulus to the animal. As previously described, the level of the stimulus is adjustable through the control device **120.**

The control device **120** under an embodiment may communicate with the tracking unit **10** and the stimulus unit **20** on separate channels in order to minimize interference between the respective signals.

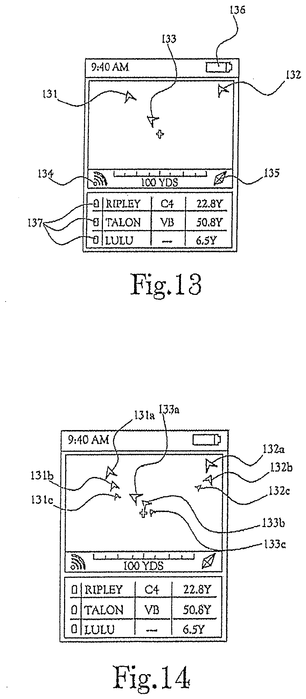

**Figures 13** through **16** illustrate various displays and graphical heading indicators, which may be shown on the control device **120** of **Figure 12** using display **122** according to various examples. Referring to **Figures 13** through **16****,** the example display screens **122** provided by the control device **120** include tracking information for three different dogs, as generally represented by the display icons corresponding to the current direction and location of the animal and/or past locations and directions of the animal. In the example embodiments, the animals being tracked are referred to in some of the figures as Ripley, Talon, and Lulu, respectively. Note that the present general inventive concept is not limited to any particular number of tracked animals. Moreover, although the example embodiments of **Figures 13** through **16** illustrate various different dogs being tracked, the present general inventive concept is not limited to any particular number or type of animal.

**Figure 13** illustrates a display screen **122** generated by the control device **120** of **Figure 12****,** in one example. In **Figure 13****,** the three different direction indicator arrows **131, 132, 133** correspond to the current location and direction, or heading, of the respective animals relative to the user's position. The cross-hair in the middle of the screen can be used to represent the current location of the user, although the present general inventive concept is not limited to any particular type of graphical indicators, or icons, to represent the animal and user. For example, the graphical representations of the animals could take the form of an animal-shaped icon. In various example embodiments, the head of the animal could be used to indicate the current direction of the animal, and the body of the animal could be used to indicate the current location of the animal based on the current scale of the display screen. The icons can indicate whether the dog is running, on point, treed, stationary, barking, and the like, and the movement of the user.

Although the user's location is represented in the illustrated embodiments as a cross-hair, it is possible to display the location and heading of the user using any number of icons, such as a human figure, arrow, circle, or other icon. The orientation of the direction arrow (e.g., up, down, left right, etc.) can represent the current heading or direction of the animal and user relative to one another, and the icons can be color coded so the user knows which icon corresponds to each dog by the color of the icon matching the color of the text.

The display **122** can include an incremented scale to provide a visual representation of the actual distance between the user and the respective animals, and can display the actual calculated distances from the user for each animal. The user has the option to keep the scale at a fixed distance (e.g., 100 yards), or the user can select Auto where the scale will automatically adjust in real time once the animal goes outside the scale. The unit can periodically check to see if any of the animals are outside the scale and can zoom to a level where all the animals are visible on the screen. If the animal is lost or off-screen, a graphical indicator, such as an outline of the icon or a blinking icon representing the animal can be provided to the user, or a separate tab can be provided showing the animal's location in relation to the scaled display.

In **Figure 13****,** Ripley is represented as **131;** Talon as **132;** and Lulu as **133.** Ripley **131** is shown located 22.8 yards from the user and provided with continuous stimulation C4 according to one of the stimulus buttons **125;** Talon **132** is shown located 50.8 yards from the user and provided with vibration stimulation VB according to one of the stimulus buttons **125;** and Lulu **133** is shown located 6.5 yards from the user with no stimulation provided. The stimulation buttons **125** of the control device **120** can be selectively assigned to each dog, respectively, and used to provide the corresponding stimulus as desired by the user.

The display can include a GPS fix indicator **134,** compass indicator **135,** and battery indicator **136.** The display can also include separate battery level indicators **137** corresponding to the battery level of the individual GPS units, respectively. In various example embodiments, the GPS fix indicator **134** can indicate whether the control device **120** has achieved a 'fix' on the animals as determined by a GPS engine. The compass indicator **135** can indicate the current orientation of the control device **120** as determined by the compass unit.

**Figure 14** illustrates another display screen **122** generated by the control device of **Figure 12****,** in one example. In **Figure 14****,** similar to **Figure 13****,** the three large direction indicator arrows **131a, 132a, 133a** correspond to the current location and direction of the animals relative to the user's position. However, **Figure 14** includes a plurality of additional and smaller indicator arrows **131a, 131b, 131c; 132a, 132b, 132c; 133a, 133b, 133c,** corresponding to a plurality of historical data points relative to each animal's movement. These additional data points are represented in the form of smaller (i.e., subdued) arrows, although any other shape, number, and/or size of icons could be used.

In **Figure 14****,** the smaller historical data points can be displayed in an incrementally subdued fashion such that the oldest data point is displayed in a lighter or fainter strength, whereas the most current data point is displayed in full strength, to provide a visual representation of the historical trail of the animal. Thus, the movement and data points transmitted by the first device can be received and displayed by the second device to provide a historical mapping as well as current location and direction information of the animal's movement relative to the user.

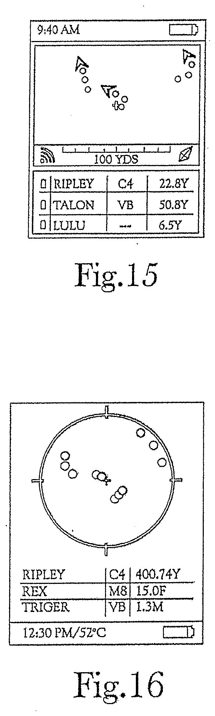

**Figure 15** illustrates another display screen **122** generated by the control device **120** of **Figure 12****,** in one example. In **Figure 15****,** similar to **Figures 13** and **14****,** the three large direction indicator arrows correspond to the current location and direction of the animals relative to the user's position. However, **Figure 15** includes a plurality of circles **131d, 132d, 133d** corresponding to historical data points relative to the animal's movement. Although these additional data points are represented in the form of circles, any other shape, size, and number of icons could be used. The smaller circles representing historical data points can be displayed in an incrementally subdued fashion such that the oldest data point is displayed in a lighter or fainter strength, whereas the most current data point is displayed in full strength, to provide a visual representation of the historical trail of the animal. Thus, similar to the example embodiment of **Figure 14****,** the movement and data points transmitted by the first device (or tracking unit **10**) can be received and displayed by the second device (or control device **120**) to provide a historical mapping as well as current location and direction information of the animal's movement relative to the user.

**Figure 16** illustrates another display screen generated by the control device **120** of **Figure 12****,** in one example. **Figure 16** includes a plurality of circles **131e, 132e, 133e** corresponding to historical data points relative to the animal's movement, but does not include the three large indicator arrows. These historical data points are represented in the form of circles, although any other shape, size, and number could be used. In **Figure 16****,** similar to **Figure 15****,** the smaller circles representing historical data points can be displayed in an incrementally subdued fashion such that the oldest data point is displayed in a lighter or fainter strength, whereas the most current data point is displayed in full strength, to provide a visual representation of the historical trail of the animal. Thus, the movement and data points transmitted by the first device (or tracking unit **10**) can be received and displayed by the second device (or control device **120**) to provide a historical mapping of the animal's movement relative to the user, with the most recent circle also providing the current location of the first device.

In the example embodiments, the change of position between the most recent data point and the prior data point can be used to provide a directional vector, or indicator, indicating the dog's recent movement. This vector information can be used to graphically display the dog's current heading in relation to the user. In the example embodiments, the dog's current heading can be indicated by an arrow while the historical location data points are displayed as dots or circles, although it is possible that any other shape or number of data points could be used without departing from the broader scope and teachings of the present general inventive concept.

The user can select to display a complete history of the paths taken by the respective animals, a partial history, or no history at all. The historical paths can take the form of a series of icons, historical data points, or a continuous path line or bread-crumb trail to show the path of the animal over time. For example, if the screen becomes cluttered with numerous paths, the user can selectively choose the length of paths shown, or no paths shown. The handheld control device can be programmed to automatically refresh the display screen at predetermined intervals or lengths of trails to maintain a fresh looking display.

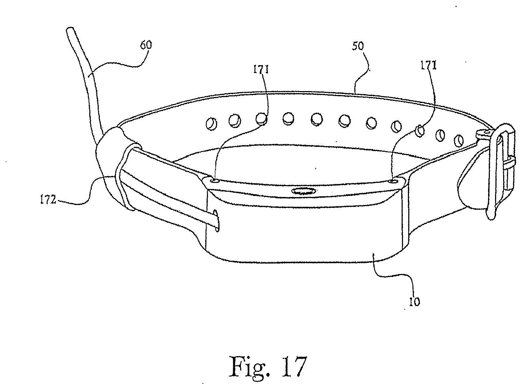

**Figure 17** is a perspective view of a modular dog tracking collar under an embodiment. The collar includes an animal tracking unit **10** and docked stimulus unit **20.** **Figure 17** is intended to be a more complete showing of the modular dog collar of **Figure 6****.** In **Figure 17****,** the dog collar **50** is affixed to the tracking unit **10** with screws **171.** The animal encircling device **50** may be provided with a loop **172** to secure a positioning of the antenna **60.**

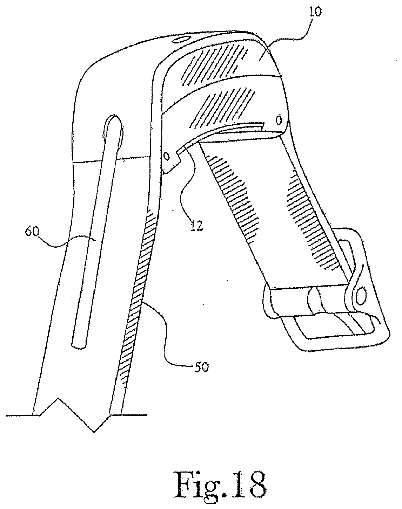

**Figure 18** illustrates a view of the tracking unit **10** fixed to the dog collar **50** according to another embodiment of the present general inventive concept. **FIG. 18** is similar to **Figure 6** except that dog collar **50** wraps over the tracking unit **10** on a surface facing away from the dog, rather than being fixed to ends of the tracking unit **50** with screws **171** as in **Figure 17****.** As previously described, any number of collars and methods of fixing the collars to the tracking unit **10** may be used.

In the present invention,
the stimulation unit is a slave device to the tracking unit. The apparatus comprises a stimulation unit/module (hereinafter referred to as a modular E-collar unit or stimulus unit) which mates with a stand-alone tracking unit/module (hereinafter referred to as a stand-alone GPS tracking unit or tracking unit) to form an integrated GPS tracking/E-collar system.

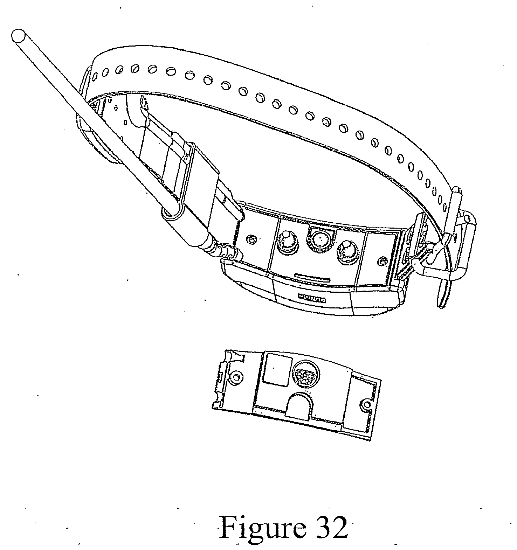

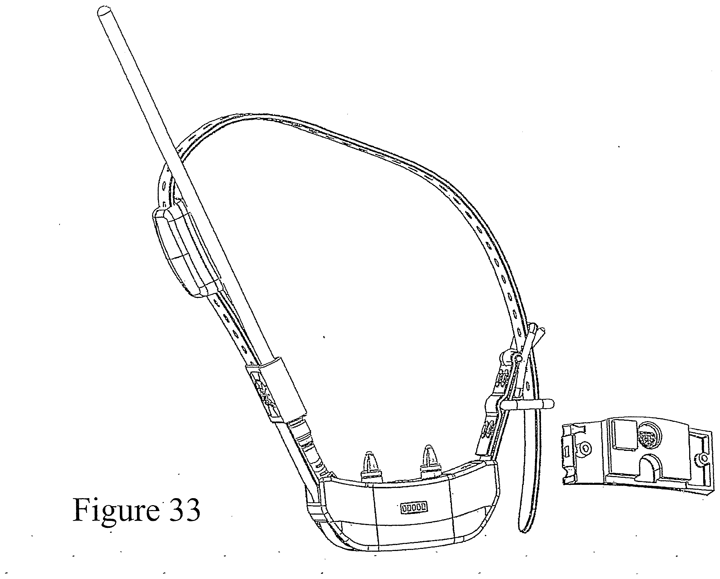

The E-collar unit is entirely a slave device and has no smart circuitry, no independent power supply and no antenna. Accordingly, the modular E-collar unit is dependent upon the GPS tracking unit for its power supply, for its general operation and for communication to and from a remote hand held control device. The integrated system is further described below with reference to **Figures** 19-33.

**Figure 19** is a front view of the integrated GPS tracking/E-collar system **200.** The system **200** features the GPS tracking unit **202** coupled with the E-collar unit **204.**

**Figure 20** is a top down view of the integrated GPS tracking/E-collar system **200.**

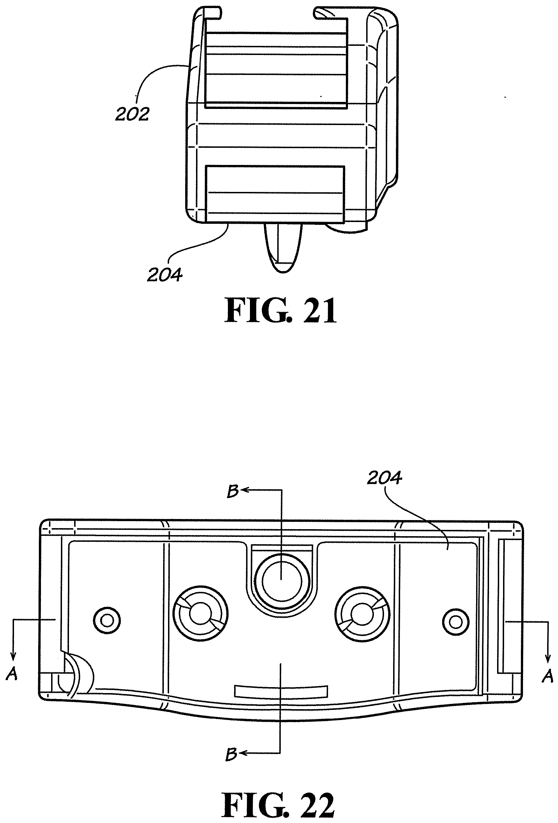

**Figure 21** is a side view of the integrated GPS tracking/E-collar system **200** comprising the GPS tracking unit **202** coupled with the E-collar unit **204.**

**Figure 22** is a bottom view of the integrated GPS tracking/E-collar system **200.** The bottom view as seen in **Figure 22** comprises a bottom view of a modular E-collar unit **204** secured to the GPS tracking unit.

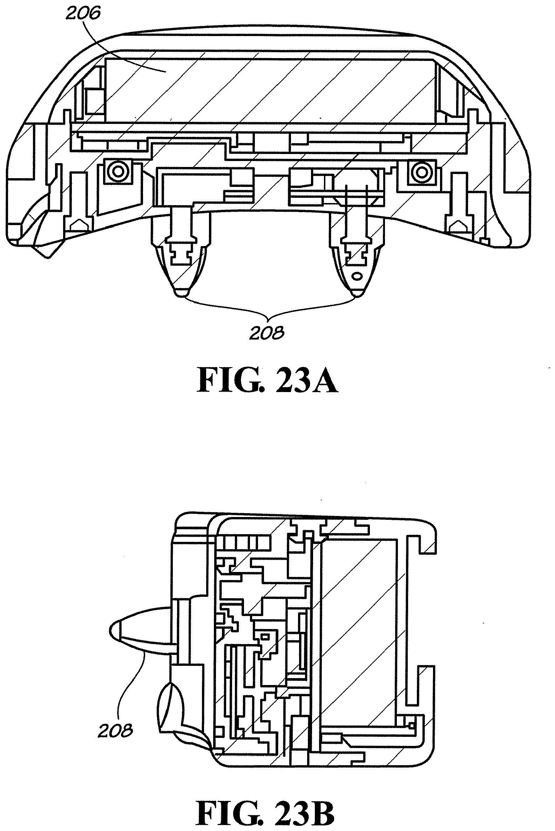

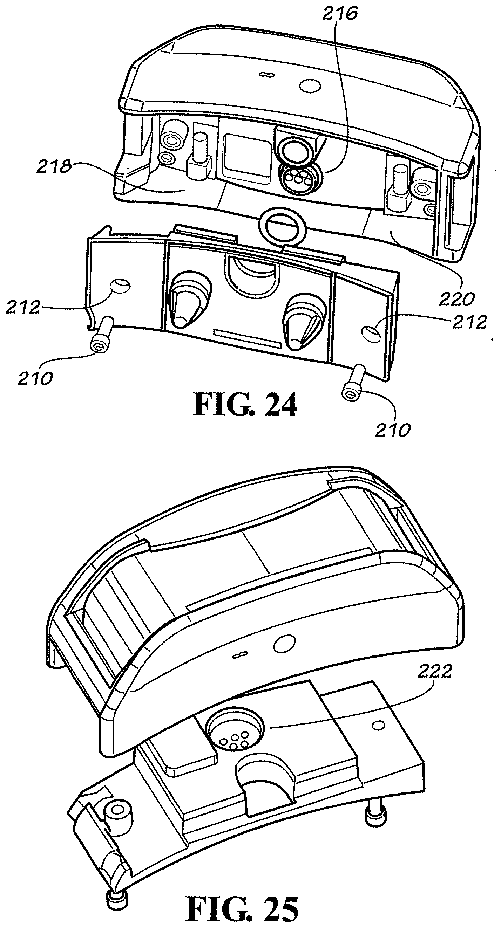

**Figures 23A** and **23B** are cross-sectional views of the integrated GPS tracking/E-collar system **200.** **Figure 23A** is taken across **Line A-A** of **Figure 22****,** while **Figure 23B** is taken across **Line B-B** of **Figure 22****.** **Figure 23A** shows the power supply **206** of the GPS tracking unit **202.** The power supply may include a lithium ion polymer battery. Both **Figure 23A** and **23B** show the stimulus probes **208** extending from the E-collar unit. Under an embodiment, the GPS tracking unit **202** receives command signals from a remote handheld control unit or transceiver. In response to such signals, the GPS tracking unit may communicate with the E-collar unit through the signal contacts **(****Fig. 24****, 216)** to initiate application of a stimulus to the animal through stimulus probes **208.**

As already noted above, the E-collar unit **204** does not have its own firmware or microcontroller or other "smart circuitry." Further, the E-collar unit **204**
does not have its own battery or other power supply. Still further, the E-collar unit **204** does not have its own antenna. Instead, the E-collar unit **204** operates
as a slave system dependent on the GPS tracking unit **202** for operation and communication back to the hand held device. Note that such handheld device is not shown in **Figures 19-33** but is analogous to the handheld device **120** described in **Figure 12** above.

**Figures 19-23** show the E-collar unit **204** secured to the GPS tracking unit **202.** **Figure 24** shows an exploded view of the integrated GPS tracking/E-collar system. **Figure 24** displays the fasteners **210** which pass through holes **212** in the E-collar unit **204** to secure the E-collar unit **204** to the GPS tracking unit **202.** Using the fasteners **210,** the modular E-collar unit **204** may under an embodiment be easily secured to or removed from the GPS tracking unit **202.**

**Figure 24** also shows the signal contacts **216** of the GPS tracking unit **202.** When the E-collar unit **204** is secured to the GPS tracking unit **202,** the tracking side signal connections **216** couple with the E-collar (i.e. stimulus unit) signal connections (not shown) and are surrounded by a water tight seal system which provides a hermetically sealed communication pathway between the E-collar unit and the GPS tracking unit. The signal contacts may be electrical but embodiments are not so limited. The contacts may comprise pogo pin or metal spring connections. As another example, the contacts may comprise an optical coupling.

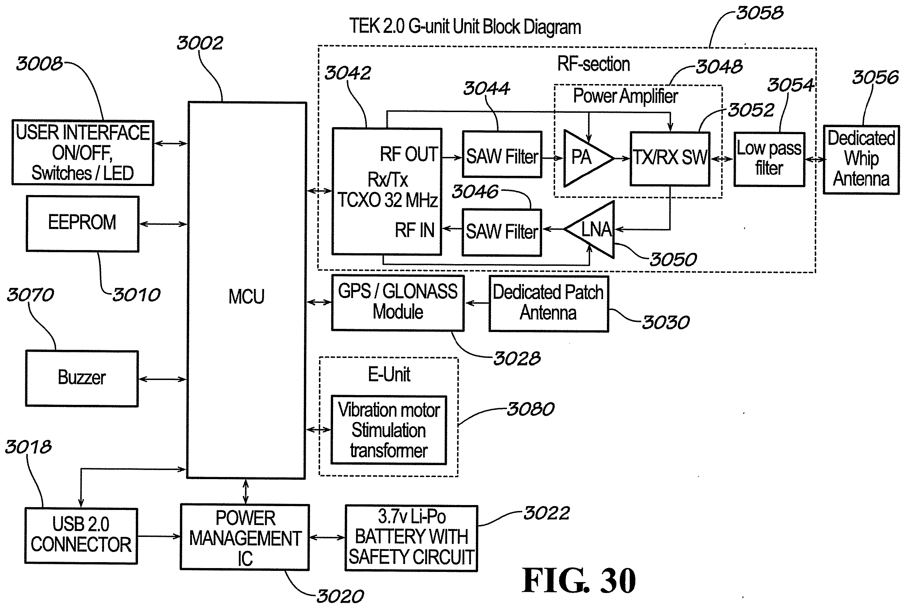

Once the E-collar unit is fastened to the GPS tracking unit, a microcontroller of the GPS tracking unit **202** automatically detects that the E-collar stimulus unit **204** has been installed and begins to communicate with the unit **204** based on instructions received from a hand held control device. A microcontroller (further disclosed in **Figure 30** below) housed in the tracking unit features a detection pin coupled to the signal contacts of the GPS tracking unit **202** which detects the presence of a connected E-collar unit **204** thereby initiating communication. Due to the fact that the modular E-collar is a slave device, the GPS unit **202** provides identical tracking functionality without the E-collar. When the microcontroller of the GPS tracking unit fails to detect the presence of a communication coupling with signal contacts of the E-collar unit, the GPS tracking unit simply operates as a stand-alone unit without the stimulus functionality otherwise provided by the E-collar unit. The easy removal of E-collar stimulus unit recommends the unit for use in dog competitions in which competing dogs are not allowed to wear any form of stimulus device during competition performances. When the E-collar unit is disengaged from the GPS tracking unit, a user of the integrated system may replace the active unit with a dummy (or rather inactive) E-collar unit.

Note that the stimulus applied by the E-collar stimulus unit may be electrical but embodiments are not so limited. Under alternative embodiments, the applied stimulus may be noise, tone or vibration. Further, when the E-collar unit is disengaged from the GPS tracking unit, the tracking unit may not apply any stimulus to an animal.

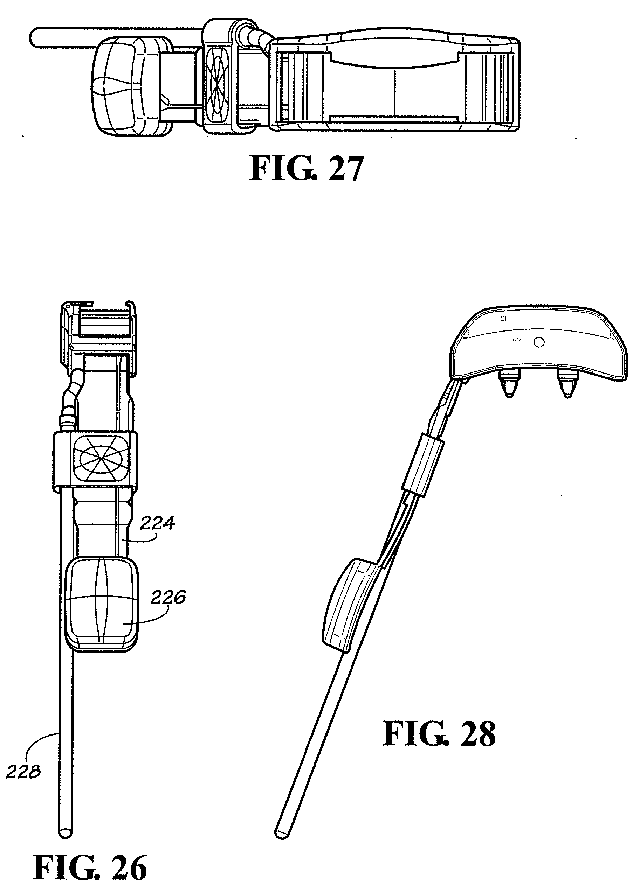

**Figure 24** also displays a GPS co-axial cable connector **218** and a radio co-axial cable connector **220** which respectively couple with a GPS antenna and a radio antenna. The GPS antenna and a radio antenna are shown below in **Figures 26-28****.**

**Figure 25** provides another exploded view of the integrated GPS tracking/E-collar system. The E-collar signal contacts **222** are seen on the E-collar unit.

**Figure 26** is a side view of the integrated GPS tracking/E-collar system. The GPS unit co-axial cable connector **218** is coupled to the GPS antenna **226** using a GPS co-axial cable **224.** The E-collar unit radio co-axial cable connector **220** is coupled to the radio antenna **228.**

**Figure 27** is a top view of the integrated GPS tracking/E-collar system from **Figure 26****.**

**Figure 28** is a front view of the integrated GPS tracking/E-collar system from **Figure 26****.**

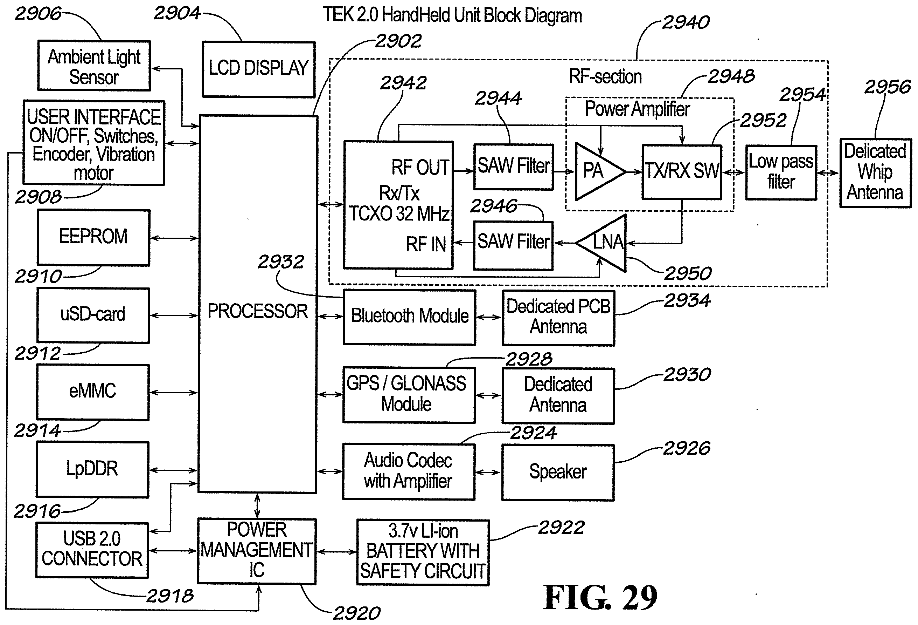

As indicated above, the GPS tracking unit communicates with a handheld control device. The handheld control device comprises under one embodiment a TEK 2.0 handheld unit. **Figure 29** comprises a unit block diagram representing circuitry of a handheld control device. The circuitry includes a processor **2902.** The processor is coupled to an LCD display **2904** which presents data and graphics to a user. The processor is also coupled to an ambient light sensor **2906.** Under one embodiment, the sensor measures ambient light levels of the device's environment. The processor may adjust the LCD display back light brightness based on measured ambient light levels. The processor **2902** may adjust LCD display back light brightness using a power management-integrated circuit **2920.**

The processor **2902** is coupled to memory modules **2910-2916.** The memory modules include EEPROM (Electronically Erasable Read-Only Memory) **2910.** EEPROM comprises a type of non-volatile memory used in computers and other electronic devices to store small amounts of data that must be saved when power is removed, e.g., calibration tables or device configuration. Under one embodiment, EEPROM **2910** stores settings and calibration data for the handheld control device. The memory modules also include LPDDR1 **2916** which comprises low power double data rate synchronous DRAM (Dynamic Random Access Memory). LPDDR1 **2916** provides the processor **2902** a 200 MHz bus for RAM memory usage. The memory module also includes an eMMC component **2914.** Under one embodiment eMMC architecture provides MultiMediaCard flash memory for use in circuit boards as an embedded non-volatile memory system. The eMMC component **2914** provides memory for the device's operating system, maps and applications under one embodiment. The memory modules also include uSD card component **2912.** Under one embodiment, a uSD card is removably coupled to a uSD card reader. This uSD card may store special maps and files of a user.

The processor **2902** is also coupled to a user interface **2908.** The interface **2908** includes an On/Off button, switches, a rotary encoder and vibration motor. Under one embodiment, a user manipulates the rotary encoder to move one or more cursors among interface menu items. Under one embodiment, a user implements switches to make selections and settings for general operation of the device. Under one embodiment, a user manipulates buttons located on a side of the device to send stimulation commands to the GPS tracking unit for communication to the stimulus unit (E-collar unit **204**). The user interface also includes a vibration module to provide alarms and warnings to the user.

The processor **2902** is also coupled to a GPS / GLONASS Module **2928.** The GPS / GLONASS module comprises a parallel GPS / GNSS receiver with 99 channels for searching satellite transmissions and 33 channels for tracking the GPS tracking unit. The GPS / GLONASS module is coupled to a dedicated antenna **2930.**

The processor **2902** is coupled to a Power Management Integrated Circuit (PMIC) **2920.** Under an embodiment, power management integrated circuits (power management ICs or PMICs) are integrated circuits for managing power requirements of a host circuit/system. The PMIC **2920** may include an integrated linear recharger for the Lithium-ion battery **2922** coupled to the PMIC. Further, the PMIC regulates all used voltages for the processor and accessories. The Lithium-ion battery includes an integrated safety circuit and a Negative Temperature Coefficient (NTC) resistor.

The processor **2902** is also coupled to an Audio Codec module **2924.** An audio codec is a device or computer program capable of coding or decoding a digital stream of audio. In software, an audio codec is a computer program implementing an algorithm that compresses and decompresses digital audio data according to a given audio file format or streaming media audio format. Under an embodiment, the audio codec **2924** generates sounds and processes MP3 files. The audio codec **2924** includes an integrated 1-Watt speaker amplifier.

The processor is coupled to a Bluetooth module **2932.** Bluetooth is a wireless technology for exchanging data over short distances. The Bluetooth module includes integrated stack software and comprises class 1 and class 2 configurations.

The processor is coupled to a USB 2.0 connector **2918** for recharging the battery. The USB 2.0 connector also provides an interface to external devices.

The processor is coupled to an RF module **2940** The RF Module includes a TCXO 32 MHz transceiver. The transceiver integrated circuit (IC) works from an 866 to a 915 MHz band. The transceiver implements Gaussian frequency shift keying modulation. The transceiver module transmits data at a rate of 3000 bit/s. The transceiver module provides 25kHz channel separation.

The transceiver IC **2942** is coupled to Surface Acoustic Wave (SAW) **2944, 2946** filters which filter incoming and outgoing transmissions. The SAW filters reduce spurious emissions and provide out-of-band interference rejection under one embodiment. SAW filters may be dedicated for each frequency band. A power amplifier **2948** amplifies RF signals from 10-20MW to .5W or 1W. A Tx/Rx RF switch **2952** is integrated into the power amplifier under an embodiment. The power amplifier **2948** is coupled to a low pass filter **2954** which reduces spurious emissions of the power amplifier. The Tx/Rx switch is coupled to a low noise amplifier **2950** which amplifies received signals via the whip antenna **2956** from the GPS tracking unit.

The processor **2902** of the handheld device performs one or more of the following functions:
--produces terrain map calculations, rotations and visualizes maps via LCD display, under an embodiment;
--processes user interface via rotary encoder and switches, under an embodiment;
--receives, evaluates, measures handheld device's navigation coordinates and speed via GPS / GLONASS module, under an embodiment;
--receives GPS-collar location messages via RF-receiver and visualizes objects to the LCD display, under an embodiment;
--transmits stimulation commands to the GPS tracking unit via RF-transmitter, under an embodiment;
--transmits handheld device's geological location to other handheld units in same group via RF-transmitter, under an embodiment;
--provides power management control via power management IC, under an embodiment;
--provides battery recharge control via power management IC, under an embodiment;
--provides two way communication via Bluetooth module, under an embodiment;
--provides two way communication via USB 2.0, under an embodiment;
--generates audio signals and sounds via audio codec IC, under an embodiment;
--measures ambient light level for adjusting the LCD display back light level, under an embodiment;
--saves / reads data from the memory modules, under an embodiment; and
--saves / reads user settings to / from the memory modules **2910-2916,** under an embodiment.

As indicated above, the handheld control device wirelessly communicates with the GPS tracking unit (and E-collar unit through the GPS tracking unit). **Figure 30** shows a block diagram describing circuitry of the GPS tracking unit under an embodiment.

As seen in **Figure 30****,** the tracking unit includes a Micro Controlling Unit (MCU) **3002.** The MCU **3002** is coupled to a user interface **3008.** The interface **3008** includes an On/Off button for turning the device on and off. Under one embodiment, an LED light indicates On/Off status of the tracking unit.

The MCU **3002** is coupled to an EEPROM (Electronically Erasable Read-Only Memory) memory module **3010.** EEPROM comprises a type of non-volatile memory used in computers and other electronic devices to store small amounts of data that must be saved when power is removed, e.g., calibration tables or device configuration. Under one embodiment, the EEPROM module **3010** stores settings and calibration data for the tracking unit.

The MCU **3002** is also coupled to a Power Management Integrated Circuit (PMIC) **3020.** Under an embodiment, the PMIC **3020** may include an integrated linear recharger for the 3.7V Lithium ion battery **3022** coupled to the PMIC. The Lithium ion battery includes a safety circuit and Negative Temperature Coefficient (NTC) resistor.

The MCU **3002** is also coupled to a buzzer component **3070.** The buzzer component **3070** generates sounds by using a driver circuit.

The MCU **3002** is coupled to an RF module **3058** which includes components **3042-3056.** The RF module components are under one embodiment the same as (and function in a manner analogous to) the components of RF module **2940** shown in **Fig. 29****.**

The MCU **3002** is coupled to the E-collar unit **3080.** The E-collar unit applies harmless electric stimulation to the dog when commands arrive via RF receiver circuitry of the tracking unit and are subsequently communicated to E-collar unit. The E-collar unit applies harmless vibration to the dog when commands arrive via RF receiver circuitry of the tracking unit and are subsequently communicated to E-collar unit.

The MCU **3002** performs one or more of the following functions:
--measures tracking unit's navigation coordinates and speed via GPS / GLONASS module, under an embodiment;
--receives stimulation commands from the handheld device via RF-transmitter, under an embodiment;
--transmits tracking unit's own geological location to the hand held devices/units in same group via RF-transmitter, under an embodiment;
--implements battery recharge control via power management IC, under an embodiment;
--provides two way communication with external devices via USB 2.0, under an embodiment;
--generates audio signals and sounds via buzzer, under an embodiment; and
--saves / reads data from the memory **3010,** under an embodiment.

Under an embodiment, the transceiver of the tracking unit's RF module transmits signals including positioning date to the remote handheld control device at defined intervals ranging from 2.5 seconds to 2 minutes; otherwise the transceiver listens for command signals transmitted by the remote device. A command signal may comprise an instruction to apply stimulus to an animal wearing the integrated GPS tracking/E-collar system.

The tracking unit may also include a 3D accelerometer and magnetometer component that functions to identify and report a stance or posture of an animal wearing the integrated system. For example, a dog on point assumes a different posture than a dog treeing an animal. The 3D accelerometer and magnetometer detect the posture and report the activity to the remote handheld control unit.

The tracking unit may also include a bark detection circuitry. The bark detection circuitry detects and reports barks per minute to a remote handheld controller. The bark per minute metric may be unique to certain animal behaviors. For example, the bark per minute is different for a dog that is tracking versus baying an animal. The microcontroller reports the bark per minute metric to the remote handheld transceiver. Accordingly, a user of the integrated GPS tracking/E-collar unit system may use the bark per minute metric to detect an activity of the animal when the animal is neither within visible or audible range of the user. For example, the bark per minute metric may indicate the vocalizing of a dog at bay.

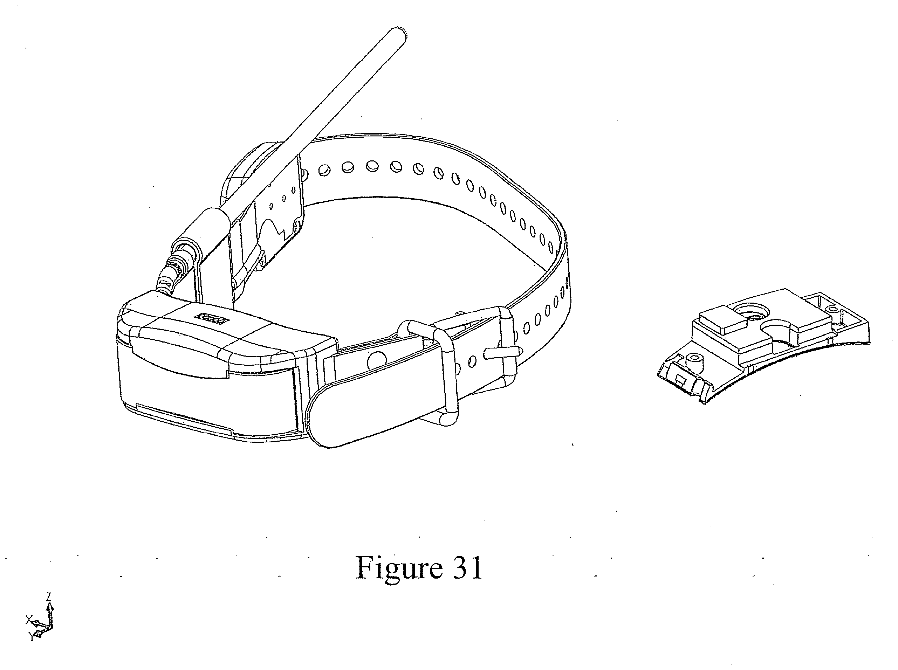

**Figures 31-33** show the integrated GPS tracking/E-collar system under an embodiment. Note that **Figures 31-33** show the integrated system attached to a collar which may then be used to mount the system onto an animal. Further, such figures show an example of a decoupled E-collar unit next to each integrated GPS tracking/E-collar system.

According to various embodiments of the present general inventive concept, an animal tracking and control system and apparatus (also referred to as a GPS tracking/E-collar system and apparatus under an alternative embodiment) provides a user with an animal tracking, animal training, or animal tracking/training system that can be user configured. In any of a number of example configurations, there is only one collar (or other animal encircling device) mounted device which is provided to the animal, and only one control device to control the mounted device. The control device may be a remote handheld control unit. Such an apparatus and system greatly simplifies the mounting and operation of an animal training and/or tracking system. Such an apparatus and system also benefits the animal provided with the tracking and control apparatus, due to reduced bulk and weight resulting from not having to wear two separate devices with two separate securing members.

An animal tracking and control apparatus of the invention comprises a tracking unit configured and programmed to track the location of an animal, a stimulus unit to provide a stimulus to the animal, and a support device for supporting the tracking unit on the animal. The tracking unit and the stimulus unit are configured to be removably coupled. The tracking unit is configured to detect the presence of the stimulus unit when the stimulus unit is coupled to the tracking unit. The tracking unit
is configured to wirelessly communicate with a control device remote from the tracking unit. The stimulus unit is a slave device to the tracking unit.

The tracking unit of an embodiment is configured to automatically detect the presence of the stimulus unit when the stimulus unit is coupled to the tracking unit.

The tracking unit of an embodiment is fixed to an animal encircling device.

The coupling between the tracking unit and the stimulus unit of an embodiment comprises a water tight seal.

The tracking unit of an embodiment includes a Global Navigation Satellite Systems (GNSS) device that provides location information of the tracking unit to the control device.

The tracking unit of an embodiment includes bark detection circuitry that detects barks per minute of the animal.

The tracking unit of an embodiment is configured to transmit the barks per minute to the control device.

The tracking unit of an embodiment includes a three dimensional accelerometer and magnetometer component to detect posture information of the animal.

The tracking unit of an embodiment is configured to transmit the posture information to the control device.

The stimulus unit of an embodiment is provided with one or more probes to contact a skin surface of the animal and to deliver one or more electrical corrective pulses in response to input from the control device.

The stimulus unit of an embodiment does not have its own control circuitry, but is configured to receive signals from the control device through the tracking unit.

The received signals of an embodiment include command signals to initiate the one or more corrective pulses.

The stimulus unit of an embodiment does not have its own power source, but is configured to receive operating power from a power source located within the tracking unit.

The stimulus unit of an embodiment does not have its own antenna, but communicates wirelessly with the control device through an antenna associated with the tracking unit.

The detecting the presence of the stimulus unit of an embodiment includes the tracking unit configured to communicate with the stimulus unit.
The tracking unit of an embodiment is configured to communicate with the stimulus unit when the stimulus unit is coupled to the tracking unit.

## Claims

1. An animal tracking and control apparatus (200), comprising:
a tracking unit (202) configured and programmed to track the location of an animal;
a stimulus unit (204) to provide a stimulus to the animal; and
a support device (50) for supporting the tracking unit on the animal;
wherein:
the tracking unit and the stimulus unit are configured to be removably coupled; and
the tracking unit is configured to wirelessly communicate with a control device (120) remote from the tracking unit;
**characterized in that**:
the tracking unit is configured to detect the presence of the stimulus unit when the stimulus unit is coupled to the tracking unit; and
the stimulus unit is a slave device to the tracking unit.

2. The apparatus of claim 1, wherein the tracking unit (202) is configured to automatically detect the presence of the stimulus unit (204) when the stimulus unit is coupled to the tracking unit.

3. The apparatus of claim 1, wherein the tracking unit is fixed to an animal encircling device (50).

4. The apparatus of claim 1, wherein the coupling between the tracking unit (202) and the stimulus unit (204) comprises a water tight seal.

5. The apparatus of claim 1, wherein:
the tracking unit (202) includes a Global Navigation Satellite Systems (GNSS) device that provides location information of the tracking unit to the control device.

6. The apparatus of claim 1, wherein the tracking unit (202) includes a bark detection circuitry that detects barks per minute of the animal.

7. The apparatus of claim 6, wherein the tracking unit (202) is configured to transmit the barks per minute to the control device (120).

8. The apparatus of claim 1, wherein the tracking unit (202) includes a three dimensional accelerometer and magnetometer component to detect posture information of the animal.

9. The apparatus of claim 8, wherein the tracking unit (202) is configured to transmit the posture information to the control device (120).

10. The apparatus of claim 1, wherein the stimulus unit (204) is provided with one or more probes (208) to contact a skin surface of the animal and to deliver one or more electrical corrective pulses in response to input from the control device (120).

11. The apparatus of claim 10, wherein the stimulus unit (204) does not have its own control circuitry, but is configured to receive signals from the control device (120) through the tracking unit.

12. The apparatus of claim 11, wherein the received signals include command signals to initiate the one or more corrective pulses.

13. The apparatus of claim 10, wherein the stimulus unit (204) does not have its own power source, but is configured to receive operating power from a power source located within the tracking unit (202) or wherein the stimulus unit does not have its own antenna, but communicates wirelessly with the control device (120) through an antenna (226) associated with the tracking unit.

14. The apparatus of claim 1, wherein the detecting the presence of the stimulus unit (204) includes the tracking unit (202) configured to communicate with the stimulus unit.

## Patentansprüche

1. Tier-Nachverfolgungs- und Steuervorrichtung (200), umfassend:
eine Nachverfolgungseinheit (202), die ausgelegt und programmiert ist, um den Standort eines Tiers nachzuverfolgen;
eine Reizeinheit (204), um dem Tier einen Reiz bereitzustellen; und
eine Tragevorrichtung (50) zum Tragen der Nachverfolgungseinheit an dem Tier;
wobei:
die Nachverfolgungseinheit und die Reizeinheit ausgelegt sind, um entfernbar miteinander gekoppelt zu sein; und
die Nachverfolgungseinheit ausgelegt ist, um drahtlos mit einer Steuervorrichtung (120) entfernt von der Nachverfolgungseinheit zu kommunizieren;
**dadurch gekennzeichnet, dass**:
die Nachverfolgungseinheit ausgelegt ist, um das Vorhandensein der Reizeinheit zu detektieren, wenn die Reizeinheit mit der Nachverfolgungseinheit gekoppelt ist; und
die Reizeinheit eine Slave-Vorrichtung der Nachverfolgungseinheit ist.

2. Vorrichtung nach Anspruch 1, wobei die Nachverfolgungseinheit (202) ausgelegt ist, um das Vorhandensein der Reizeinheit (204) automatisch zu detektieren, wenn die Reizeinheit mit der Nachverfolgungseinheit gekoppelt ist.

3. Vorrichtung nach Anspruch 1, wobei die Nachverfolgungseinheit an einer Tier-Umschließungsvorrichtung (50) befestigt ist.

4. Vorrichtung nach Anspruch 1, wobei die Kopplung zwischen der Nachverfolgungseinheit (202) und der Reizeinheit (204) eine wasserdichte Abdichtung umfasst.

5. Vorrichtung nach Anspruch 1, wobei:
die Nachverfolgungseinheit (202) eine globale Satellitennavigationssystem- (GNSS-) Vorrichtung umfasst, die der Steuervorrichtung Standortinformationen der Nachverfolgungseinheit bereitstellt.

6. Vorrichtung nach Anspruch 1, wobei die Nachverfolgungseinheit (202) eine Bell-Detektionsschaltung umfasst, die ein Bellen pro Minute des Tiers detektiert.

7. Vorrichtung nach Anspruch 6, wobei die Nachverfolgungseinheit (202) ausgelegt ist, um das Bellen pro Minute an die Steuervorrichtung (120) zu übermitteln.

8. Vorrichtung nach Anspruch 1, wobei die Nachverfolgungseinheit (202) eine dreidimensionale Beschleunigungsmesser- und Magnetometerkomponente umfasst, um Haltungsinformationen des Tiers zu detektieren.

9. Vorrichtung nach Anspruch 8, wobei die Nachverfolgungseinheit (202) ausgelegt ist, um die Haltungsinformationen an die Steuervorrichtung (120) zu übermitteln.

10. Vorrichtung nach Anspruch 1, wobei die Reizeinheit (204) mit einer oder mehreren Sonden (208) bereitgestellt ist, um eine Hautoberfläche des Tiers zu berühren und als Reaktion auf eine Eingabe von der Steuervorrichtung (120) einen oder mehrere elektrische Korrekturimpulse abzugeben.

11. Vorrichtung nach Anspruch 10, wobei die Reizeinheit (204) keine eigene Steuerschaltung aufweist, sondern ausgelegt ist, um durch die Nachverfolgungseinheit Signale von der Steuervorrichtung (120) zu empfangen.

12. Vorrichtung nach Anspruch 11, wobei die empfangenen Signale Befehlssignale umfassen, um den einen oder die mehreren Korrekturimpulse zu initiieren.

13. Vorrichtung nach Anspruch 10, wobei die Reizeinheit (204) keine eigene Leistungsquelle aufweist, sondern ausgelegt ist, um Betriebsleistung von einer Leistungsquelle zu empfangen, die innerhalb der Nachverfolgungseinheit (202) angeordnet ist, oder wobei die Reizeinheit keine eigene Antenne aufweist, sondern durch eine Antenne (226), die der Nachverfolgungseinheit zugeordnet ist, drahtlos mit der Steuervorrichtung (120) kommuniziert.

14. Vorrichtung nach Anspruch 1, wobei das Detektieren des Vorhandenseins der Reizeinheit (204) umfasst, dass die Nachverfolgungseinheit (202) ausgelegt ist, um mit der Reizeinheit zu kommunizieren.

## Revendications

1. Appareil de traçage et commande d'un animal (200), comprenant :
une unité de traçage (202) configurée et programmée pour tracer l'emplacement d'un animal ;
une unité de stimulus (204) pour fournir un stimulus à l'animal ; et
un dispositif de support (50) pour supporter l'unité de traçage sur l'animal ;
dans lequel :
l'unité de traçage et l'unité de stimulus sont conçues pour être couplées de manière amovible ; et
l'unité de traçage est configurée pour communiquer sans fil avec un dispositif de commande (120) distant de l'unité de traçage ;
**caractérisé en ce que** :
l'unité de traçage est configurée pour détecter la présence de l'unité de stimulus lorsque l'unité de stimulus est couplée à l'unité de traçage ; et
l'unité de stimulus est un dispositif asservi pour l'unité de traçage.

2. Appareil selon la revendication 1, dans lequel l'unité de traçage (202) est configurée pour détecter automatiquement la présence de l'unité de stimulus (204) lorsque l'unité de stimulus est couplée à l'unité de traçage.

3. Appareil selon la revendication 1, dans lequel l'unité de traçage est fixée à un dispositif (50) qui encercle un animal.

4. Appareil selon la revendication 1, dans lequel le couplage entre l'unité de traçage (202) et l'unité de stimulus (204) comprend un joint étanche à l'eau.

5. Appareil selon la revendication 1, dans lequel :
l'unité de traçage (202) comprend un dispositif GNSS (Global Navigation Satellite Systems (système global de positionnement par satellite) qui fournit des informations de localisation de l'unité de traçage au dispositif de commande.

6. Appareil selon la revendication 1, dans lequel l'unité de traçage (202) comprend un circuit de détection d'aboiement qui détecte les aboiements par minute de l'animal.

7. Appareil selon la revendication 6, dans lequel l'unité de traçage (202) est conçue pour transmettre les aboiements par minute au dispositif de commande (120).

8. Appareil selon la revendication 1, dans lequel l'unité de traçage (202) comprend un composant d'accéléromètre et de magnétomètre tridimensionnel pour détecter des informations de posture de l'animal.

9. Appareil selon la revendication 8, dans lequel l'unité de traçage (202) est conçue pour transmettre les informations de posture au dispositif de commande (120).

10. Appareil selon la revendication 1, dans lequel l'unité de stimulus (204) est pourvue d'une ou plusieurs sondes (208) pour entrer en contact avec une surface de peau de l'animal et pour délivrer une ou plusieurs impulsions de correction électrique en réponse à une entrée provenant du dispositif de commande (120).

11. Appareil selon la revendication 10, dans lequel l'unité de stimulus (204) ne comporte pas ses propres circuits de commande indépendants, mais est configurée pour recevoir des signaux en provenance du dispositif de commande (120) à travers l'unité de traçage.

12. Appareil selon la revendication 11, dans lequel les signaux reçus comprennent des signaux d'instruction pour initier les une ou plusieurs impulsions de correction.

13. Appareil selon la revendication 10, dans lequel l'unité de stimulus (204) ne comporte pas sa propre source d'alimentation, mais est conçue pour recevoir une puissance de fonctionnement à partir d'une source d'alimentation située à l'intérieur de l'unité de traçage (202) ou dans lequel l'unité de stimulus ne comporte pas d'antenne, mais communique sans fil avec le dispositif de commande (120) via une antenne (226) associée à l'unité de traçage.

14. Appareil selon la revendication 1, dans lequel la détection de la présence de l'unité de stimulus (204) comprend l'unité de traçage (202) configurée pour communiquer avec l'unité de stimulus.
